# DEMANDE DE BREVET EUROPEEN

(11) **EP 1 083 509 A1**
(43) Date de publication de la demande: **14.03.2001**
(21) Numéro de dépôt: 00402223.2
(22) Date de dépôt: 03.08.2000
(51) Int. Cl.: G06F 17/60

(54) **Procédé d'affichage sur un terminal d'utilisation**

(30) Priorité: 09.09.1999 FR 9911278
(71) Demandeur: ALCATEL, 75008 Paris (FR)
(72) Inventeur: Attimont, Luc, 78100 Saint Germain en Laye (FR); Bodin, Jannick, 92380 Garches (FR)
(74) Mandataire: Lamoureux, Bernard

(57) **Abrégé**

On remplace (4) des encarts (9) publicitaires, dont sont émaillés des fichiers reçus en se connectant au réseau Internet (5), par d'autres encarts (29) publicitaires plus en rapport avec les souhaits soit d'un fournisseur d'accès (4) soit d'un utilisateur d'un terminal (1).

## Description

La présente invention a pour objet un procédé d'affichage sur un terminal d'utilisation d'un document obtenu au cours d'une session de visualisation d'un site Internet. Le but de l'invention est de rendre plus rationnels les documents présentés aux utilisateurs essentiellement lorsque ces documents sont des pages de type composite réalisées au moyen d'un langage de description de type hypertexte.

Dans le domaine de la bureautique, on connaît les logiciels de traitement de texte permettant de constituer des textes par insertion, suppression, déplacement de suites de caractères (voire de paragraphes) dans un fichier. On connaît également des logiciels de visualisation permettant notamment de présenter sur un écran une ou plusieurs pages dans lesquelles la nature séquentielle des éléments du fichier est respectée. Le fichier peut par ailleurs contenir des objets, des images produites à partir d'un autre logiciel, par exemple de création ou de traitement d'images. Ces images incorporées dans la page sont représentées avec un logiciel de visualisation comme si des images correspondantes avaient été éditées avec le logiciel de départ. Ce mode d'affichage s'est généralisé. En pratique, pour simplifier les idées, un fichier à afficher sur un écran comporte des informations d'un premier type. Ces informations d'un premier type sont des données à afficher. Ces informations d'un premier type sont en relation avec un premier mode d'affichage, un premier mode de constitution d'une mémoire d'image dont le contenu est présenté sur un écran. A un endroit donné dans la page affichée à l'écran, donc à un endroit donné dans le fichier, des deuxièmes informations à afficher sont présentes. Ces deuxièmes informations correspondent à un deuxième mode de constitution de la page affichée à l'écran, celui par exemple nécessaire pour montrer une image. Dans ce cas, dans le fichier un appel est fait à un fichier source comportant d'une part les deuxièmes informations à afficher et d'autre part le mode de constitution de la partie de la page correspondante.

L'évolution des fichiers, suite séquentielle de caractères d'un même type à afficher, puis suite séquentielle de caractères d'un même type organisée avec des appels à des fichiers sources, s'est par la suite considérablement perfectionnée avec la création des langages dits HTML- HyperText Markup Language - langage à marquage hypertexte. Dans de tels langages HTML l'appel a des fichiers sources est complété par la désignation d'un fichier de renvoi (lien hypertexte). Le principe de ces renvois est le suivant.

Lors de l'édition d'un document, le pointage ou la désignation d'un objet ou d'un caractère sur l'écran entraîne la mise à disposition des logiciels nécessaires pour modifier, supprimer, compléter et visualiser les caractères présentés dans les régions pointées ou désignées. Ceci est le cas même lorsque le pointage est placé sur une partie d'image correspondant à l'affichage d'un fichier source rattaché.

Lors de l'affichage d'un fichier de type HTML, une autre fonction est associée à ce pointage. En général cette fonction est provoquée par une manoeuvre spécifique, la plupart du temps un double clic de la touche gauche de la souris, alors que l'index de celle-ci pointe sur une région d'image concernée. Cependant une autre touche d'un clavier, par exemple la touche d'envoi, ou de retour chariot, pourrait être utilisée à cet effet. Dans le cas où l'élément pointé est marqué par la désignation d'un fichier de renvoi (lien hypertexte), la fonction associée au pointage et déclenchée par cette manoeuvre spécifique est le remplacement de la page du fichier HTML affichée à l'écran par la page du fichier de renvoi désigné par le lien hypertexte. Cette autre page est prélevée dans une autre mémoire, on l'appellera la page de renvoi. La page de renvoi est ainsi la page vers laquelle on est envoyé à partir d'une page initiale.

Cette technique est en particulier mise en oeuvre dans Internet où les pages présentées sur les terminaux possèdent, pour certains des éléments de ces pages, des propriétés de renvoi. Pour simplifier l'explication, en plus de la page visualisée, il est de coutume de présenter dans une barre supérieure de l'écran l'adresse URL - Universal Ressource Locator - du fichier HTML décrivant la page affichée. Il est par ailleurs habituel de présenter dans une barre inférieure de l'écran l'éventuelle adresse de renvoi associée à l'élément de la page affichée pointé par le dispositif de pointage. Cette adresse de renvoi est celle dont on fera provenir une page alors que l'organe de pointage est pointé sur un élément de la première page et que l'action spécifique de renvoi (ou de double clic) est lancée.

En conséquence, par rapport aux fichiers classiques, les fichiers rédigés dans le langage HTML possèdent pour chaque élément de la page éventuellement des désignations de position, toujours des informations à afficher, et éventuellement des informations de renvoi. Les informations à afficher sont elles-mêmes soit directement éditables par l'éditeur du fichier (du type édition en traitement de texte classique) ou éditables sur l'écran par un logiciel d'affichage d'image (ou un sous-programme du logiciel d'édition comportant une faculté de présentation d'image). Ce fichier comporte en outre, pour l'élément de la page concerné que cet élément soit un texte ou une image, la désignation d'un fichier de renvoi pour permettre, en fonction du besoin ou de la volonté, la commutation décrite ci-dessus.

Dans Internet, cette faculté a été mise à profit pour permettre à un utilisateur visualisant un site de pouvoir, par simple action du double clic sur une image ou un texte présenté sur la page affichée, d'être renvoyé à une autre page, plus complète ou différente, et donnant des informations plus précises sur un sujet que l'utilisateur veut approfondir. L'adresse de renvoi peut correspondre à un même site, c'est-à-dire en pratique une même machine physique de délivrance de fichiers connectée à Internet. Dans ce cas l'adresse de renvoi peur être une sous-adresse dans ce site. Cependant l'adresse de renvoi peut pointer sur un autre site, produit par un autre organisme, même la plupart du temps sur une autre machine, connectée, elle aussi, au réseau Internet.

Ainsi des sociétés qui produisent des annuaires sur Internet mettent à disposition des utilisateurs qui visitent leur site un moteur de recherche avec lequel le visiteur peut poser une question, thématique ou nominative. L'utilisateur peut ainsi se faire livrer, sous forme de pages composées par le moteur de recherche, une liste de sites Internet fournissant des informations sur un thème évoqué ou correspondant à la dénomination recherchée. Les sites de la liste sont en outre produits (automatiquement) en langage HTML, de sorte que l'utilisateur n'a plus qu'à les pointer et engager la manoeuvre spécifique pour y prélever le contenu.

Ce service est gratuit. Néanmoins il a un coût. Pour arriver à se financer, les sociétés de production d'annuaires en ligne gratuits ont prévu de placer, dans le message d'invite à poser une question ainsi que dans le message de réponse à la question posée, des encarts publicitaires ou informatifs incitant l'utilisateur à prendre connaissance de l'existence d'un autre site. Bien entendu, pour ces autres sites présentés à titre publicitaire, une image est montrée sur l'écran qui représente le thème de la publicité. Cette image publicitaire est associée, selon la programmation HTML, à une adresse de renvoi. L'adresse de renvoi correspond à un site géré par l'organisme qui a accepté de payer l'encart publicitaire à la société de production d'annuaire gratuit.

D'autres services sur Internet sont également gratuits. Certaines bases de données sont par exemple accessibles sans frais. Pour financer l'édition de ces bases de données leurs fournisseurs ont intérêt à adopter un même mode de publication d'encarts publicitaires.

Un tel procédé n'est pas toujours intéressant pour l'utilisateur. En effet parce que le marché Internet est mondial, l'utilisateur au cours d'une session Internet peut être situé dans un endroit du monde et être investi d'une culture complètement différente de celle de l'organisme qui a souscrit l'encart publicitaire. En outre, pour des raisons commerciales, la publicité présentée peut n'avoir un intérêt que régional, par exemple des publicités pour des produits seulement disponibles en Amérique, alors que l'utilisateur est d'une autre région, par exemple d'Europe, où les produits vantés ne sont pas distribués. Dans ces conditions la publicité présentée perd son attrait.

On connaît par ailleurs un mode de suppression des encarts publicitaires lors d'une connexion au réseau Internet. Le principe de cette suppression repose sur le fait que les encarts publicitaires se présentent sous la forme d'images et que chaque logiciel navigateur, permettant de lancer une requête sur le réseau Internet et de recevoir des informations de la session à visualiser, peut prévoir d'une part de ne pas demander la transmission du contenu des images et/ou d'autre part de ne pas les afficher. Une telle démarche peut avoir comme intérêt de limiter le flot d'informations transmis sur le réseau, et donc la rapidité d'accès à l'information recherchée.

Cependant cette technique, tout en éliminant les publicités non désirées ou sans intérêt parce que correspondant à des besoins sans objet, devient de moins en moins utilisable. En effet les concepteurs de services en lignes de sites Internet, pour rendre leurs services plus attrayants, ont l'habitude de remplacer des suites de caractères alphanumériques affichables comme un texte normal, par une image de remplacement. Cette image de remplacement contient par exemple, en plus de l'indication alphanumérique un logo évocateur et intuitivement perceptible par l'utilisateur. Dans ces conditions en mode de réception avec suppression d'image, seul un cadre vide peut être présenté sur l'écran de l'utilisateur. S'il ne veut pas recevoir l'image, il peut même ne pas connaître la signification littérale contenue dans ce cadre. Il est alors amené à désactiver de son navigateur l'option de suppression de transmission des images.

Dans l'invention, pour résoudre ce problème, on prévoit de remplacer les encarts publicitaires, renvoyant à des services ou des produits sans intérêt pour le consommateur, par d'autres encarts publicitaires correspondant mieux à ses besoins. Ce remplacement est effectué de préférence en traitant le fichier transmis par le réseau Internet en réponse à une requête émise par le demandeur avant que ce fichier ne soit fourni à cet utilisateur. Pour simplifier, selon l'invention un utilisateur se connecte au réseau Internet par l'intermédiaire d'un fournisseur d'accès et lance une requête en visualisation d'un site. Au moment où le fournisseur d'accès reçoit la réponse à la requête en provenance du réseau Internet, il la livre à l'utilisateur en ayant modifié certaines des caractéristiques du fichier transmis : celles qui correspondent aux publicités indésirables.

Le principe est alors le suivant, il suffit dans le fichier reçu, et à transmettre à l'utilisateur, de rechercher des informations caractéristiques permettant de déduire que pour partie l'information transmise est une information de publicité. Une fois que ceci apparaît avéré, il faut rechercher dans le fichier transmis quelle était l'image source, plus exactement quels étaient les caractères alphanumériques dans ce fichier, représentatifs de l'adresse du site source de l'image publicitaire. On remplace alors la désignation de cette adresse source par une désignation d'une autre adresse source correspondant à un autre message publicitaire. Ce remplacement n'est toutefois pas suffisant. En effet si l'utilisateur pointe son organe de pointage sur la nouvelle image source présentée, il verra effectivement une autre publicité que celle qu'on voulait lui montrer. Mais la page de renvoi, le site de renvoi restera le site de renvoi prévu à l'origine. Dans ces conditions dans l'invention, on effectue aussi le remplacement, dans le fichier, des caractères alphanumériques représentatifs du site de renvoi attaché à cette image publicitaire pour, de préférence, le remplacer par un site de renvoi correspondant à la nouvelle image publicitaire qui lui est présentée.

On montrera qu'en agissant ainsi on peut adapter les messages publicitaires à une clientèle locale : le fournisseur d'accès peut savoir par nature à quel endroit physique s'est connecté l'utilisateur, et donc à priori quel est le spectre de ses besoins compte tenu de la culture de la population à cet endroit. D'autres filtrages plus personnalisés seront également possibles. En outre, l'avantage ainsi procuré par l'invention est que les informations pour remplacement, adresse du fichier source et adresse du fichier de renvoi, n'ont elles-mêmes pas besoin d'être transmises par le réseau Internet. En effet, dans son serveur de proximité un fournisseur d'accès peut mémoriser ces informations et effectuer le remplacement à la volée. Il est même possible que la page de renvoi et l'image source elle-même soient stockées dans ce serveur de proximité, ce qui réduit encore le trafic sur le réseau Internet (qui commence par ailleurs à se saturer).

L'invention a donc pour objet un procédé d'affichage sur un terminal d'utilisation d'une première page dans une session de visualisation d'un premier site dans lequel,
- on lance à ce premier site une requête d'affichage de cette première page de ce premier site,
- dans ce terminal d'utilisation, on reçoit un fichier de type hypertexte, transmis en provenance de ce premier site, et comportant des éléments à afficher,
- chaque élément à afficher comporte une information relative à un contenu pour cette première page,
caractérisé en ce que
- on repère dans le fichier hypertexte transmis des expressions particulières, et
- quand ces expressions particulières comportent des caractéristiques attendues,
- pour chaque élément à afficher contenant des expressions particulières comportant des caractéristiques attendues on modifie avant affichage une information relative au contenu et une information d'adresse de renvoi à une autre page.

L'invention a également pour objet un dispositif d'affichage sur un terminal d'utilisation d'une première page dans une session de visualisation d'un premier site comportant
- un serveur de proximité interposé entre ce terminal et ce premier site,
- des moyens dans ce serveur de proximité pour recevoir un fichier de type hypertexte, transmis au terminal d'utilisation en provenance de ce premier site,
- ce fichier comportant des éléments à afficher,
- chaque élément à afficher comportant une information (src=) relative à un contenu pour cette première page,
caractérisé en ce que ce serveur de proximité comporte
- des moyens pour repérer dans le fichier hypertexte transmis des expressions particulières, et
- des circuits pour, quand ces expressions particulières comportent des caractéristiques attendues, modifier avant affichage pour chaque élément à afficher contenant des expressions particulières qui comportent des caractéristiques attendues une information relative au contenu et une information d'adresse de renvoi à une autre page.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: la représentation schématique d'une organisation des moyens impliqués pour mettre en oeuvre le procédé de l'invention ;
- Figure 2 : une représentation simplifiée du fichier transmis en réponse à une requête Internet et des parties de ce fichier qui vont être remplacées selon le procédé de l'invention ;
- Figure 3 : une représentation schématique de critères permettant de repérer dans une page transmise la présence d'une publicité à remplacer.

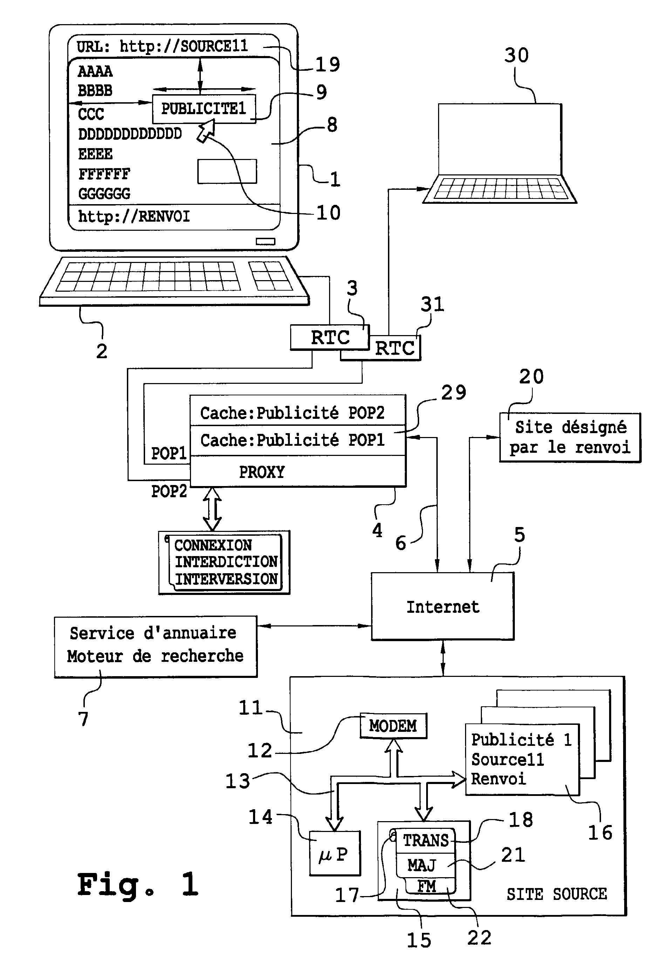

La figure 1 montre les différents moyens utilisables pour mettre en oeuvre le procédé de l'invention. Un terminal d'utilisation 1, comportant par exemple un micro-ordinateur muni de son clavier 2, est relié, en général par un réseau téléphonique commuté 3, aux circuits 4 d'un fournisseur d'accès. Le fournisseur d'accès permet un accès à un site, plus généralement un réseau 5 de sites, notamment le réseau Internet. De ces sites le terminal d'utilisation peut recevoir des information sous forme de fichier, ou il peut leur en envoyer. Les circuits 4 comportent en pratique des organes de type modem pour recevoir les requêtes en provenance du terminal 1, et d'autres organes de type modem pour se connecter au réseau 5 ici Internet. Éventuellement les connexions 6 des circuits 4 au réseau 5 peuvent elles-mêmes passer par le réseau téléphonique commuté 3, ou par un réseau spécialisé.

Une requête émise par le terminal 1 comporte essentiellement une désignation d'une adresse d'un serveur 7 d'informations auquel l'utilisateur du terminal 1 souhaite être connecté et dont il souhaite recevoir une page en général une page d'accueil, à moins qu'il n'ait déjà désigné une page spécialisée de ce serveur 7. Une adresse source 11 désignée par la requête est affichée dans une barre supérieure 19 de l'écran 8 en respectant la syntaxe Internet : http://source11. La requête comporte par ailleurs une indication d'une adresse dite IP, Internet Protocol, protocole Internet, qui va être utile au serveur 7 pour renvoyer au terminal 1 l'information souhaitée. En conséquence, la réponse destinée au terminal 1 via les circuits 4 comporte d'une part toutes les informations utiles pour afficher une page correspondant à la requête sur le terminal 1, et d'autre part l'adresse IP qui permet au réseau 5 ainsi qu'aux circuits 4 du fournisseur d'accès d'adresser correctement les informations à transmettre. Dans ce but celles-ci sont transmises en mode paquet, chaque paquet comportant une partie du fichier HTML décrivant la page reçue et une adresse correspondant à cette adresse IP.

La figure 1 montre sur l'écran 8 du terminal 1 le message, la page, reçue. Ce message comporte un certain nombre de lignes avec des indications du type alphanumériques, AAA, BBB, jusqu'à GGG. Ces informations alphanumériques sont affichées par un logiciel navigateur, logiciel qui permet d'une manière connue à la fois de constituer les requêtes, de les envoyer, de recevoir les pages en réponses, et d'afficher ces réponses sur l'écran 8. De ce dernier point de vue, un logiciel navigateur se comporte au moins comme un logiciel d'affichage de document. Par ailleurs un logiciel navigateur comporte des moyens pour introduire dans le fichier présenté des images telles que l'image 9 comportant ici un graphisme PUBLICITE1.

Avec un pointeur 10, par exemple un index dont la position est gouvernée par une souris ou une boule de manoeuvre, on peut venir désigner une zone de l'écran 8 où se trouve l'image 9. Dans ce cas, on voit apparaître en haut de l'écran, du moins si on a choisi une option permettant de le voir, une indication d'un site source d'où provient l'image représentée dans la zone 9. Par exemple, un site source 11 est connecté au réseau Internet 5 de la même façon que le serveur de données 7. Ce site source comporte dans son principe un modem 12 pour être raccordé au réseau 5 Internet d'une part, et pour être raccordé d'autre part à un bus 13 de données, d'adresse et de commande en relation avec un microprocesseur 14, une mémoire programme 15 et une mémoire de données 16 du site 11. La mémoire de programme 15 comporte un programme 17 muni d'un sous-programme essentiel 18 de transmission. Le sous-programme 18 a pour objet d'envoyer sur le réseau, à l'adresse IP qui lui est spécifiée, les informations qu'il faut montrer pour l'élément 9 de l'image et qui sont, pour simplifier, ici le graphisme PUBLICITE 1. Ce graphisme PUBLICITE 1 est par exemple mémorisé dans la mémoire 16.

D'une manière connue l'information transmise comporte également une adresse de renvoi, elle aussi par exemple contenue dans la mémoire 16 en association avec le contenu de l'image PUBLICITE1. L'adresse de renvoi apparaît alors dans une barre inférieure de l'image proposée sur l'écran 8 par le logiciel navigateur du terminal 1. L'adresse ainsi présentée dans la barre inférieure correspond à un site 20 désigné par un renvoi et où l'utilisateur prélèvera par le réseau Internet la page qu'il veut afficher sur l'écran 8, en remplacement de celle montrée sur la figure 1, s'il effectue une action spécifique (un double clic) alors que son pointeur 10 désigne la zone 9.

Tels qu'ils sont montrés, les sites 7, 11 et 20 présentent une grande diversité. Cette diversité permet d'illustrer un cas général. Il est cependant possible de faire tenir tout ou partie des informations d'image mémorisées dans la mémoire 16 du site 11 dans le site 20 lui-même. Mais une telle architecture n'est pas si intéressante. En effet, sur le plan économique, le site 7 est géré par un fournisseur de services, notamment de services gratuits et en particulier de services d'annuaires. Pour des raisons de bonne gestion de sa publicité, il peut choisir de demander à son client, qui de son côté gère le site 20 (et qui cherche à faire venir chez lui des utilisateurs) de lui donner le fichier correspondant à la mémoire 16 et qui permettent d'aboutir dans ce site 20.

Une telle manière d'agir présente alors l'avantage, pour le gestionnaire du site 7, de pouvoir disposer d'un jeu de publicités et d'encarts publicitaires à afficher en zone 9, en lieu et place de la publicité PUBLICITE1. En effet, comme on le verra par la suite, il est possible au gestionnaire du site 7 de savoir si l'utilisateur du terminal 1 a déjà utilisé ses services et a déjà reçu la publicité PUBLICITE1. Si c'est le cas, il peut choisir de lui en envoyer une autre, PUBLICITE2 par exemple (non représentée). En variante les informations PUBLICITE1, les informations d'adresse de source et les informations d'adresse de renvoi sont contenues dans le site désigné 20 qui pour sa gestion possède les mêmes équipements que le site 11.

Le programme 17 comporte par ailleurs des sous-programmes 21 et 22 de mise à jour et de formatage de message pour mettre à jour la mémoire 16 et constituer à la demande des réponses au format hypertexte.

Dans l'invention, on considère que le serveur 7 va proposer des publicités qui ne correspondent pas à l'utilisateur du terminal 1. Dans ces conditions, dans les circuits 4 du fournisseur d'accès, ou dans des circuits de n'importe quel organisme intervenant dans la transmission des données entre le serveur 7 et le terminal 1, on remplace les informations correspondant à l'affichage de la publicité PUBLICITE1 par d'autres informations, par exemple ces autres informations correspondent à l'affichage d'autres publicités.

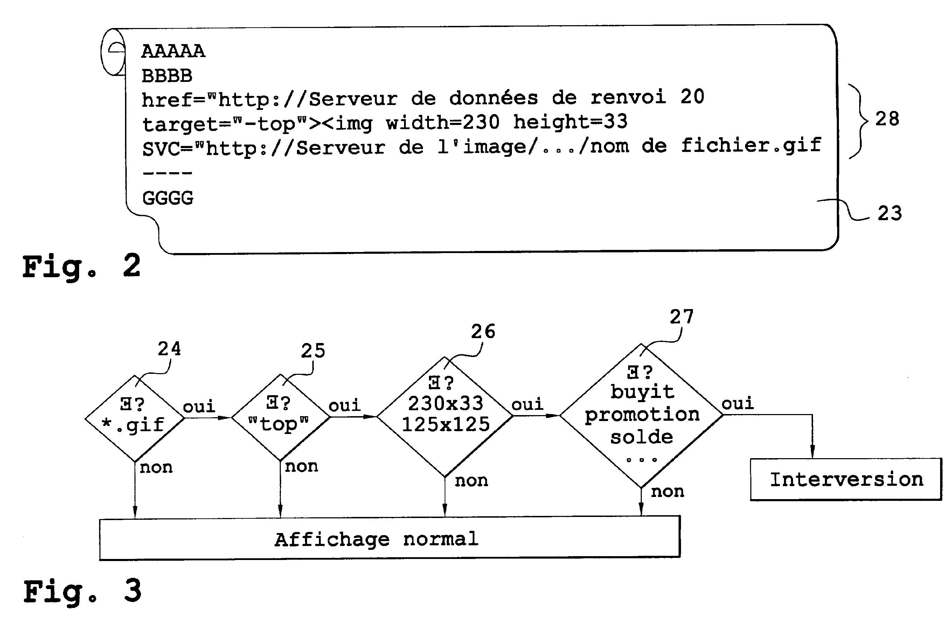

La figure 2 donne un exemple du fichier 23 qui est envoyé par le serveur 7 au terminal 1 par l'intermédiaire du réseau 5. Comme montré ce fichier 23 comporte des indications alphanumériques AAA, BBB à GGG à afficher telles quelles, en commençant par exemple par le haut à gauche de l'image présentée sur l'écran 8. Après l'affichage de BBB, le fichier comprend, séquentiellement, trois types d'informations correspondant à la zone 9. Une première information précédée de l'instruction "href=" correspond au site de renvoi 20. En pratique l'adresse qui figure après "http://" est celle du site 20. Dans la pratique cette adresse a deux formes : d'une part un libellé compréhensible par l'utilisateur et qui est visualisée sur l'écran 8 dans la zone 19. D'autre part, elle est une expression sous une forme binaire (codée par octets) qui donne l'adresse absolue du site 20 sur le réseau Internet 5. Cette adresse absolue du site 20 peut être obtenue à partir du libellé compréhensible par l'utilisateur à l'aide d'un mécanisme connu de service de noms de domaines ou DNS qui n'est pas décrit ici.

Le fichier 23 comporte également associée à cette image de la zone 9 une instruction "target=" qui indique, selon le langage HTML normalisé, la place, la position et les dimensions de la réservation dans l'écran 8 dévolue à la présentation de l'image 9. Par exemple ici la place est une place indiquée en haut ("top") avec une dimension d'image de 230 pixels de large pour 33 pixels de haut. Enfin, le fichier 23 comporte une troisième instruction "src=" indiquant l'adresse source, celle à laquelle on trouve effectivement le contenu de ce qu'il faut afficher à l'endroit 9 et qui en pratique est contenu ici dans la mémoire 16 du site 11. Pour une image 9, les instructions href=, target= et src= se suivent dans un ordre immuable, même si l'adresse de renvoi href= et l'instruction de position sont optionnelles. Ou bien d'autres moyens sont donnés par ailleurs pour permettre de reconnaître leur association à la présentation et à la visualisation de l'image 9.

Notamment l'instruction src= est toujours suivie, en fin d'instruction, par l'indication d'un nom de fichier et d'un type d'image. Le type d'image est représenté par une désinence de type .gif ou .jpg ou autres qui sont des normes de représentations des différents fichiers. Les désinences gif, jpg ou autres servent à détecter que le nom de fichier qui la possède est en fait une image. Cette désinence elle-même indique quel est le logiciel de visualisation d'image qu'il faut utiliser pour la présenter. Normalement le navigateur du terminal 1 possède des sous-programmes capables de montrer tous les formats d'images normalisées connus.

Dans l'invention on va remplacer, dans les circuits 4, l'image PUBLICITE1 par une autre image. Comme il n'est pas question de faire faire ce travail par un opérateur, ce travail sera fait automatiquement. Dans ce but, les circuits 4 possèdent des équipements, en particulier analogues à ceux du serveur 11, capables de mettre en oeuvre un programme de test montré schématiquement sur la figure 3. Ce programme de test a pour but de tester des expressions particulières dans les fichiers transmis pour savoir si dans l'image montrée on a affaire à une image de publicité.

Le programme de la figure 3 comporte dans ce but un premier test 24 pour savoir si dans le fichier 23 il y a une image élémentaire de type .gif .jpg ou autre ou si au contraire la partie montrée est un fichier texte (désinence habituelle .doc ou .txt). Si ce n'est pas le cas, s'il s'agit d'un fichier de texte, on ne provoquera pas la permutation et on laissera l'affichage se dérouler normalement.

Dans un second test 25, qui peut être lié au fait que la partie à montrer du fichier est une image, on va chercher à connaître la position de l'image. Étant donné que les pages Internet sont présentées aux utilisateurs en en calant le haut sur le haut de l'écran 8, il est possible qu'une partie d'une page à montrer, parce qu'elle est trop grande, soit située en deçà de la taille de l'écran 8. Dans ce cas, d'une manière connue, une barre d'ascenseur vertical sur le côté permet de déplacer la page verticalement. Cette barre d'ascenseur permet de la faire défiler dans l'écran 8. Cependant, le début de la page qui est montrée est normalement le haut de la page. Bien entendu, s'agissant de publicité, les annonceurs cherchent à ce qu'elles accrochent l'attention. Par conséquent la position de l'encart publicitaire 9 comportera souvent une indication de haut de page : une indication "-top" ou équivalent. Si ce n'est pas le cas on provoquera un affichage normal.

Par contre si c'est le cas, on pourra regarder la taille de l'image montrée. En effet les annonces publicitaires ne sont pas destinées à remplacer et à envahir l'écran 8 alors que l'utilisateur a posé une requête précise. Par conséquent, les dimensions des encarts 9 sont relativement faibles. Et notamment pour des raisons d'interversion les uns avec les autres comme évoqués ci-dessus, ils auront des tailles normalisées. En particulier la taille 230 x 33 est une taille normalisée pour un encart publicitaire. On connaît par ailleurs d'autres tailles comme la taille 125 x 125. Au cours d'un test ultérieur 26 on regarde donc pour les données de position de l'encart 9 quelle est la taille de l'encart (dont on ne sait pas encore s'il est publicitaire) qui doit être montré à l'emplacement 9. Si la taille n'est pas une taille d'un petit encart mais au contraire celle d'une grande image, hors des formats spécifiés, il s'agit certainement de l'image que voulait obtenir l'utilisateur du terminal 1. Il n'est donc pas question de la changer.

Si par contre c'est le cas, on peut encore regarder au cours d'un test ultérieur 27 dans les arguments de l'instruction source src=, si on trouve des expressions caractéristiques d'un rangement d'un contenu publicitaire. En effet une organisation normalement hiérarchique prévoit dans un serveur d'image (qu'il s'agisse du serveur 11, du serveur 7 ou du serveur 20) que des encarts publicitaires, surtout lorsqu'il y en a plusieurs, soient rangés dans des répertoires spéciaux. Pour des raisons faciles à comprendre, les noms de ces répertoires spéciaux sont des noms caractéristiques et évocateurs. Par exemple on y trouvera des noms tels que buyit, promotion, sell, solde, ou autres. Au besoin, si de tels noms ne sont pas connus, on peut sur une session de visualisation dans laquelle un tel encart 9 arrive, lire le fichier hypertexte qui a conduit à la représentation de cette image, rechercher les arguments du fichier source dans l'instruction src= qui lui correspondent, et détecter quel est le nom du sous-répertoire, chez le fournisseur des services 7 dans lequel les encarts publicitaires sont rangés.

Dans le cas présent, si tous les tests 24 à 27 sont positifs, on peut avoir la conviction qu'il s'agit d'une publicité. Dans ces conditions on peut changer, en une opération, dans le fichier 23 le groupe 28 des trois instructions par un autre groupe mémorisé par exemple par avance dans une mémoire 29 du serveur d'accès 4, notamment une mémoire cache très rapide. Il n'est pas nécessaire bien sûr que tous les résultats des tests 24 à 27 ou d'autres tests soient positifs pour que l'interversion soit décidée. Éventuellement un seul de ces tests, notamment le test 26 pourra suffire pour provoquer le changement. Par ailleurs, d'autres tests sont envisageables, comme par exemple un test portant sur l'adresse du site 7 délivrant la première page, ou celle du site 11, ou celle du site 20. Selon la politique mise en oeuvre par le gestionnaire du serveur d'accès 4, la décision de remplacer les images fournies par le serveur 7 par des images d'un autre annonceur (qui, lui, paye ce service au gestionnaire du serveur d'accès 4) peut résulter d'un abonnement spécifique (éventuellement payant) souscrit par l'utilisateur du terminal 1. Ainsi on peut soumettre cette interversion, ou l'absence d'interversion, à la souscription par le propriétaire du terminal 1 d'un abonnement de type particulier auprès du fournisseur d'accès 4.

Il est possible par ailleurs que d'autres utilisateurs 30 se connectent auprès du même fournisseur d'accès qui gère les circuits 4, éventuellement par d'autres circuits 31 du réseau téléphonique commuté 3. Compte tenu de l'origine de l'appel, provenance du réseau 3 ou du réseau 31, le serveur de proximité 4 peut connaître la localisation de l'appel, par exemple savoir si l'appel provient du sud d'une région nationale ou du nord de cette région nationale. Dans ce cas le remplacement de la publicité PUBLICITE1 prévue par le serveur 7 peut être différent selon qu'il s'agit de la remplacer pour l'utilisateur du terminal 30 ou pour l'utilisateur du terminal 1. Dans ce cas la mémoire 29, qui sera de préférence une mémoire cache, comportera des publicités de types différents à fournir en fonction d'un numéro de connexion pop (point of présence - point de présence) par lequel chacun des utilisateurs des terminaux 1 ou 30 s'est connecté. En définitive, au moins de ce point de vue, on est capable de réaliser un profil de l'utilisateur, il est du nord ou du sud, et on peut adapter l'interversion des messages publicitaires en fonction de critères liés à la personnalité de l'utilisateur.

La modification dont il est question doit être assez rapide puisque le fichier 23 doit être reçu dans le serveur 4, doit être testé selon le programme de la figure 3 et doit être reproposé avec les parties convenues dans la mémoire 29 avant d'être acheminé à l'utilisateur du terminal 1 ou l'utilisateur du terminal 30. Compte tenu du peu de caractères représentés par le groupe des instructions 28 cette opération peut être effectuée à la volée sans difficulté.

De plus si l'utilisateur du terminal 1 ré-émet une même requête qu'une requête précédente, le serveur 7 peut répondre à cette deuxième requête, mais avec cette fois la présentation d'un autre encart publicitaire à l'endroit 9. De même que le gestionnaire du serveur 7 peut changer la publicité pour la deuxième réponse, de même le fournisseur d'accès 4 peut fournir une autre publicité que celle qu'il a fourni la fois précédente. Dans ce but dans la mémoire 29 les circuits 4 peuvent mémoriser, au moins le temps d'une session, les informations relatives à l'utilisateur 1 : la liste des publicités qui lui ont déjà été présentées. Dans ce cas, à chaque fois des publicités différentes lui sont diffusées. Le temps de la session peut être déduit de la validité de l'adresse IP du terminal 1.

De même, il est prévu que l'utilisateur du terminal 1, par le biais des questions qu'il pose habituellement soit peu à peu catalogué. Dans ce cas il est possible avec les circuits 4 de lui fournir des publicités qui sont mieux ciblées à son profil socioculturel. Les informations de profil et d'adresse IP peuvent être mémorisées dans une mémoire des circuits 4 en correspondance d'un numéro d'abonnement de cet utilisateur, ou d'un numéro de série correspondant au terminal 1.

## Revendications

1. Procédé d'affichage sur un terminal (1) d'utilisation d'une première page dans une session (23) de visualisation d'un premier site (7) dans lequel,
- on lance (4) à ce premier site une requête d'affichage de cette première page de ce premier site,
- dans ce terminal d'utilisation, on reçoit un fichier de type hypertexte (28), transmis en provenance de ce premier site, et comportant des éléments à afficher,
- chaque élément à afficher comporte une information (src=) relative à un contenu pour cette première page,
caractérisé en ce que
- on repère (24-27) dans le fichier hypertexte transmis des expressions particulières, et
- quand ces expressions particulières comportent des caractéristiques attendues,
- pour chaque élément (9) à afficher contenant des expressions particulières comportant des caractéristiques attendues on modifie avant affichage une information relative au contenu et une information d'adresse de renvoi à une autre page.

2. Procédé selon la revendication 1, caractérisé en ce que le premier site est un site Internet.

3. Procédé selon l'une des revendications 1 à 2, caractérisé en ce que chaque élément à afficher comporte des désignations (target) d'image dans cette première page et une information (href=) d'une adresse de renvoi à une autre page.

4. Procédé selon l'une des revendications 1 à 3, caractérisé en ce que, pour modifier avant affichage, on modifie le fichier hypertexte transmis.

5. Procédé selon l'une des revendications 1 à 4, caractérisé en ce que l'information relative à un contenu pour une première désignation d'image dans la première page est une adresse de source (source11), directe ou indirecte d'une image élémentaire, mémorisée dans ce premier site ou dans un autre site, le contenu à afficher pour cette désignation d'image de la première page étant disponible à cette adresse de source.

6. Procédé selon l'une des revendications 1 à 5, caractérisé en ce que les expressions particulières des fichiers sont des caractéristiques de publicité.

7. Procédé selon l'une des revendications 1 à 6, caractérisé en ce que les caractéristiques attendues sont des caractéristiques de taille (230x33) et ou de lieu de la position (top), et ou de nature de l'information (buyit) relative au contenu, et ou du contenu, et ou de l'adresse du site et ou de la première page.

8. Procédé selon l'une des revendications 1 à 7, caractérisé en ce que on modifie l'affichage dans un serveur (4) d'accès relié au terminal et qui sert de passerelle entre le terminal et un réseau connecté au site pour transmettre le fichier hypertexte.

9. Procédé selon la revendication 8, caractérisé en ce qu'on modifie l'affichage si un accord est donné dans un mode d'abonnement du terminal au serveur d'accès.

10. Procédé selon l'une des revendications 1 à 9, caractérisé en ce que, d'une session de visualisation à une autre, on change le mode de modification de l'affichage.

11. Procédé selon l'une des revendications 1 à 10, caractérisé en ce qu'on modifie l'affichage en fonction de caractéristiques du terminal de visualisation, et ou de la session, et ou d'un profil utilisateur.

12. Dispositif d'affichage sur un terminal (1) d'utilisation d'une première page dans une session (23) de visualisation d'un premier site (7) comportant
- un serveur (29) de proximité interposé entre ce terminal et ce premier site,
- des moyens dans ce serveur de proximité pour recevoir un fichier de type hypertexte (28), transmis au terminal d'utilisation en provenance de ce premier site,
- ce fichier comportant des éléments à afficher,
- chaque élément à afficher comportant une information (src=) relative à un contenu pour cette première page,
caractérisé en ce que ce serveur de proximité comporte
- des moyens (29) pour repérer (24-27) dans le fichier hypertexte transmis des expressions particulières, et
- des circuits pour, quand ces expressions particulières comportent des caractéristiques attendues, modifier avant affichage, pour chaque élément (9) à afficher contenant des expressions particulières qui comportent des caractéristiques attendues, une information relative au contenu et une information d'adresse de renvoi à une autre page.

13. Dispositif selon la revendication 12, caractérisé en ce que les circuits pour modifier comportent une mémoire cache.

14. Dispositif selon l'une des revendications 12 à 13, caractérisé en ce que moyens pour repérer comportent un microprocesseur pour mettre en oeuvre un programme de test (24-27) et un programme d'interversion de contenu et d'adresse de renvoi.
